# FASCICULE DE BREVET EUROPEEN

(11) **EP 1 227 945 B1**
(45) Date de publication et mention de la délivrance du brevet: **25.01.2006**
(21) Numéro de dépôt: 00977650.1
(22) Date de dépôt: 09.11.2000
(51) Int. Cl.: B60D 1/00

(54) **DISPOSITIF D'ATTELAGE POUR CHARIOT DE MANUTENTION**
KUPPLUNGSVORRICHTUNG FÜR FLURFÖRDERFAHRZEUG
COUPLING DEVICE FOR INDUSTRIAL TRUCK

(30) Priorité: 09.11.1999 FR 9914073
(43) Date de publication de la demande: 07.08.2002
(73) Titulaire: VALEO THERMIQUE MOTEUR, 78321 La Verrière (FR)
(72) Inventeur: LABADIE, Jean, F-52000 Laval (FR); CRIBIER, Jean-Pierre, F-53000 Laval (FR)
(74) Mandataire: Bezault, Jean
(86) Numéro de dépôt international: PCT/FR2000/003130
(87) Numéro de publication internationale: WO 2001/034415

(56) Documents cités:
- EP-A- 0 838 390
- DE-A- 2 746 895
- DE-A- 3 913 075
- FR-A- 2 504 461
- NL-A- 9 302 072
- US-A- 2 454 641
- US-A- 2 780 480
- US-A- 3 140 882

## Description

L'invention se rapporte aux chariots de manutention.

Elle concerne plus particulièrement un dispositif d'attelage pour chariot de manutention, comprenant un timon prévu à l'avant du chariot et un crochet prévu à l'arrière d'un tracteur, en particulier d'un chariot précédent dans une file de chariots, le timon et le crochet étant propres à coopérer l'un avec l'autre.

On connaît déjà des chariots de manutention de ce genre qui peuvent être utilisés pour différentes applications, par exemple pour transporter des pièces dans des locaux industriels, transporter des bagages dans des gares de chemin de fer ou des aéroports, etc.

Un chariot de ce type comprend habituellement un timon prévu à l'avant pour coopérer avec un crochet prévu à l'arrière d'un tracteur.

Le terme "tracteur" tel qu'il est utilisé présentement entend désigner aussi bien un engin, motorisé ou non, qui assure la traction du chariot, qu'un autre chariot situé immédiatement en amont dans une file de chariots.

Habituellement, un tel chariot comprend deux roues avant orientables et deux roues arrière, orientables ou non.

Dans les chariots de manutention connus, comme divulgués par le document US-A-2 454 641, le timon est habituellement réalisé sous la forme d'un élément longitudinal, monté à articulation autour d'un axe transversal du chariot, et muni à sa partie antérieure d'un anneau propre à coopérer avec le crochet du tracteur.

Ce timon possède généralement une longueur importante pour permettre au chariot de posséder un faible rayon de braquage et d'effectuer ainsi des demi-tours sur un faible espace.

Il en résulte pour inconvénient que la distance entre le chariot et le tracteur (en particulier un chariot précédent) dépend de la longueur du timon et qu'elle est donc nécessairement grande.

En outre, cette distance a pour inconvénient d'être fixe, si bien qu'il en résulte un encombrement important lorsqu'une file de chariots est à l'arrêt.

L'invention a notamment pour but de surmonter les inconvénients précités.

Elle vise en particulier à procurer un dispositif d'attelage du type défini précédemment qui permet de diminuer l'encombrement tout en offrant la possibilité de réaliser des demi-tours avec un faible rayon de braquage.

Elle vise également à procurer un dispositif de ce genre qui peut être facilement installé sur un chariot et qui en outre est simple à réaliser et ne nécessite pas d'entretien particulier.

L'invention propose à cet effet un dispositif d'attelage du type défini en introduction, dans lequel le timon comporte une fente longitudinale dans laquelle est propre à coulisser le crochet, en sorte que ce crochet peut coulisser dans ladite fente longitudinale entre une position éloignée, en laquelle le chariot est à une distance maximale du tracteur pendant le remorquage, et une position rapprochée, en laquelle le chariot est à une distance minimale du tracteur pour diminuer l'encombrement à l'arrêt.

On procure ainsi un attelage du type télescopique autorisant une distance variable entre le tracteur et le chariot attelé à celui-ci.

Le crochet peut coulisser dans la fente du timon entre deux positions extrêmes qui correspondent respectivement à une position éloignée pour le remorquage et une position rapprochée pour l'arrêt.

Dans la position de remorquage, le crochet vient se placer automatiquement vers l'extrémité antérieure du timon (qui est la plus éloignée du chariot), tandis que dans la position à l'arrêt, le crochet peut se placer au niveau d'une extrémité postérieure du timon (qui est la plus proche du chariot).

Dans la position de remorquage, le timon possède ainsi une longueur utile importante autorisant un braquage court, tandis que, dans la position à l'arrêt, le timon peut présenter une faible longueur utile autorisant un rapprochement du chariot et du tracteur, pouvant même aller jusqu'à une position de contact.

Ainsi, lorsque plusieurs chariots sont attelés dans une même file, ils peuvent, à l'arrêt, être ramassés les uns contre les autres en sorte que la longueur de la file corresponde sensiblement à la somme des longueurs des châssis respectifs des chariots.

Dans une forme de réalisation préférée de l'invention, le timon s'étend sensiblement à l'horizontale dans les positions où il coopère avec le crochet.

De manière préférentielle, le timon est relié à l'avant du chariot par des moyens d'articulation définissant un axe d'articulation, de manière à pivoter entre une position d'accrochage, en laquelle le timon s'étend sensiblement à l'horizontale pour coopérer avec le crochet, et une position de relevage, en laquelle le timon est en position dressée et est dégagé du crochet.

Selon une autre caractéristique de l'invention, dans la position dressée, le timon forme un angle aigu par rapport à la verticale. Avantageusement, cet angle aigu est d'environ 10°.

Selon encore une autre caractéristique de l'invention, le timon est propre également à pivoter, au delà de la position dressée, vers une position droite, en laquelle il s'étend sensiblement à la verticale sous l'action du tracteur en étant dégagé du crochet de ce dernier.

Cette position droite du timon est obtenue lorsque le chariot et le tracteur sont rapprochés au maximum offrant ainsi une position de compactage permettant de réduire l'encombrement en longueur.

Avantageusement, les moyens d'articulation précités comprennent une articulation s'étendant suivant un axe transversal sensiblement horizontal.

De manière préférentielle, le dispositif d'attelage comprend en outre des moyens élastiques de rappel propres à solliciter le timon vers sa position de relevage, tandis que le crochet s'étend vers le bas à partir d'un support prévu sous le tracteur, en sorte que le timon est rappelé élastiquement en appui contre le support pour assurer automatiquement la coopération du timon et du crochet.

Ainsi, ces moyens de rappel offrent l'avantage de pouvoir rappeler automatiquement le timon vers une position dressée, ce qui permet de diminuer l'encombrement lorsque le chariot est dételé du tracteur.

En outre, ces mêmes moyens permettent de solliciter automatiquement un appui du timon contre le crochet, ce qui simplifie notablement les opérations d'attelage et de dételage.

Avantageusement, les moyens élastiques de rappel sont interposés entre le châssis du chariot et le timon.

Ces moyens élastiques de rappel travaillent avantageusement en traction et ils sont alors interposés entre un premier point d'ancrage situé sur le châssis du chariot et un deuxième point d'ancrage situé à l'opposé du timon par rapport à son axe d'articulation.

En ce cas, de préférence, le deuxième point d'ancrage est situé sur un prolongement coudé prévu à l'opposé du timon par rapport à l'axe d'articulation et disposé de telle sorte que, dans la position de relevage du timon, l'axe d'articulation du timon, le deuxième point d'ancrage et le premier point d'ancrage soient dans un même plan.

Il en résulte que les moyens élastiques de rappel possèdent alors une ligne d'action qui coupe l'axe d'articulation du timon, ce qui garantit un rappel automatique du timon dans sa position de relevage.

Selon encore une autre caractéristique de l'invention, le crochet possède un encombrement en largeur qui est inférieur à la largeur de la fente du timon.

De préférence, le crochet comprend un plot généralement cylindrique ayant un diamètre inférieur à la largeur de la fente du timon et une rondelle entourant le plot et ayant un diamètre supérieur à la largeur de la fente du timon.

Le timon peut être avantageusement formé à partir d'une tige repliée qui définit deux branches sensiblement parallèles réunies par un coude en U.

Sous un autre aspect, l'invention concerne un chariot de manutention équipé à l'avant d'un timon et à l'arrière d'un crochet faisant chacun partie d'un dispositif d'attelage tel que défini précédemment.

Dans la description qui suit, faite seulement à titre d'exemple, on se réfère aux dessins annexés, sur lesquels :
- la figure 1 est une vue de côté d'un chariot de manutention équipé d'un dispositif d'attelage selon l'invention et muni, à l'avant, d'un timon (représenté en position relevée), et, à l'arrière, d'un crochet ;
- la figure 2 est une vue de dessus du timon ;
- la figure 3 est une vue en plan du crochet et de son support ;
- la figure 4 est une vue de côté correspondant à la figure 3 ;
- la figure 5 est une vue partielle de deux chariots réunis entre eux par un dispositif d'attelage selon l'invention, le dispositif étant représenté en position éloignée pour le remorquage ;
- la figure 6 est une vue analogue à la figure 5 dans laquelle le dispositif est représenté en position rapprochée pour diminuer l'encombrement à l'arrêt ;
- la figure 7 est une vue partielle de deux chariots se trouvant dans une position rapprochée maximale en laquelle le timon d'un second chariot est dans une position droite sensiblement verticale en étant dételé du crochet d'un premier chariot ;
- la figure 8 est une vue de côté d'une file de chariots représentés dans des positions mutuelles éloignées ; et
- la figure 9 est une vue de côté d'une autre file de chariots représentés dans des positions mutuelles rapprochées.

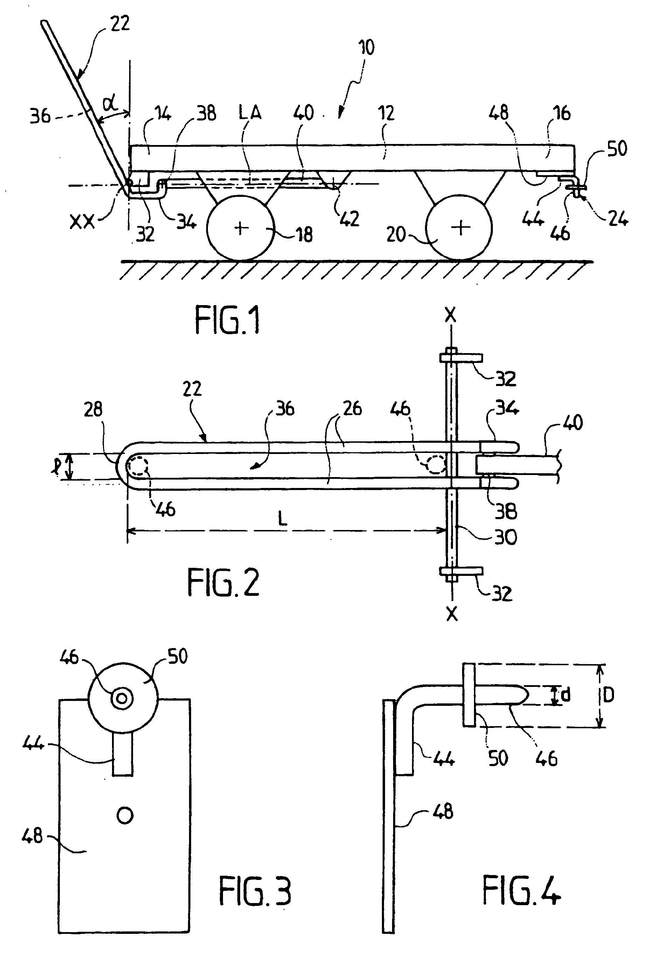

On se réfère d'abord à la figure 1 qui montre un chariot 10 comprenant un châssis 12 ayant une extrémité avant 14 et une extrémité arrière 16.

Sous le châssis 12 sont montées, à l'avant, deux roues orientables 18 et, à l'arrière, deux roues 20, de préférence non orientables.

Le chariot 10 est équipé à l'avant d'un timon 22 monté pivotant autour d'un axe d'articulation XX qui s'étend transversalement au châssis 12 et sensiblement à l'horizontale. Par ailleurs, le châssis 12 est équipé à l'arrière d'un crochet 24.

Le timon 22 du chariot est propre à coopérer avec un crochet d'un tracteur (non représenté), lequel peut être un engin motorisé ou non, ou encore un chariot analogue le précède dans une file de chariots.

Le crochet 24 du chariot est propre à coopérer avec le timon d'un autre chariot suivant dans la file de chariots.

On se réfère maintenant à la figure 2 pour décrire plus particulièrement la structure du timon 22.

Le timon proprement dit est formé à partir d'une tige repliée (dans l'exemple une barre en acier rond) qui définit deux branches sensiblement parallèles 26 réunies entre elles par un coude 28 en U. Ces deux branches sont fixées, par exemple par soudage, à une barre transversale 30 qui définit une articulation d'axe XX. Cette barre transversale est propre à coopérer avec deux embrasses 32 (figures 1 et 2) solidaires de l'extrémité avant 14 du châssis du chariot. Les deux branches 26 s'étendent au-delà de la barre transversale 30 pour définir un prolongement 34, de plus faible longueur que le timon proprement dit, lequel est prévu à l'opposé du timon par rapport à l'axe d'articulation (XX).

Les deux branches 26, le coude en U 28 et la barre transversale 30 définissent conjointement une fente longitudinale 36 ayant une longueur L et une largeur 1.

Le prolongement 34 est coudé (figure 1) et il est muni d'un élément transversal 38 situé à distance de l'axe XX et formant point d'ancrage pour un organe élastique de rappel 40. Dans l'exemple, cet organe élastique de rappel travaille en traction et est réalisé sous la forme d'un élastique. toutefois, il pourrait aussi être formé par un ressort de traction.

L'organe élastique 40 comprend une extrémité antérieure reliée au point d'ancrage 38 et une extrémité postérieure reliée à un point d'ancrage 42 prévu sous le châssis 12.

Il est à noter que le point d'ancrage 38 situé sur le prolongement coudé 34 est disposé de telle sorte que, dans la position de la figure 1, l'axe d'articulation (XX) du timon, le point d'ancrage 38 et le point d'ancrage 42 soient dans un même plan. Dans cette position, appelée aussi position de relevage, le timon 22 est en position dressée en formant un angle α d'environ 10° par rapport à la verticale.

L'organe élastique de rappel 40 possède alors une ligne d'action LA (figure 1) qui coupe l'axe d'articulation (XX) du timon, ce qui garantit un rappel automatique du timon dans sa position de relevage, laquelle constitue ainsi une position de repos.

Cette position de repos du timon 22 permet à un opérateur de passer son pied entre les branches 26 du timon et l'extrémité avant 14 du chariot pour exercer une action d'abaissement des branches du timon vers une position sensiblement horizontale, en vue d'un opération d'accrochage ou d'attelage comme décrit plus loin.

Le crochet 24 (figures 3 et 4) est réalisé à partir d'une tige métallique de section ronde qui est coudée pour définir une branche horizontale 44 et une branche verticale 46 dirigée vers le bas. Cette branche verticale 46 constitue un plot cylindrique ayant un diamètre d de valeur choisie.

La branche 44 est soudée sous une plaque support 48 de forme générale rectangulaire montée sous le châssis 12 au niveau de l'extrémité arrière 16.

Le plot cylindrique 46 est muni d'une rondelle d'appui 50 située à distance de l'extrémité libre 52 du plot cylindrique 46. Cette rondelle possède un diamètre D de valeur choisie.

Le diamètre d du plot 46 doit être inférieur à la largeur 1 de la fente 26, tandis que le diamètre D de la rondelle 20 doit être supérieur à la largeur 1 de la fente du timon.

On comprend en effet que le timon 22 du chariot doit pouvoir coopérer avec un crochet 24 (tel que celui représenté aux figures 1, 3 et 4), ce crochet étant prévu sur un tracteur, qui peut être par exemple un chariot analogue au précédent.

Ainsi, le plot 46 du crochet peut coulisser longitudinalement dans la fente 36 du timon entre deux positions extrêmes (représentées en traits interrompus sur la figure 2), avec une amplitude de coulissement légèrement inférieure à la longueur L de la fente.

Dans une première position extrême (position éloignée), le crochet se situe au niveau du coude 28 du timon et, dans une deuxième position extrême (position rapprochée), le crochet se situe proche ou contre la barre transversale 30 du timon.

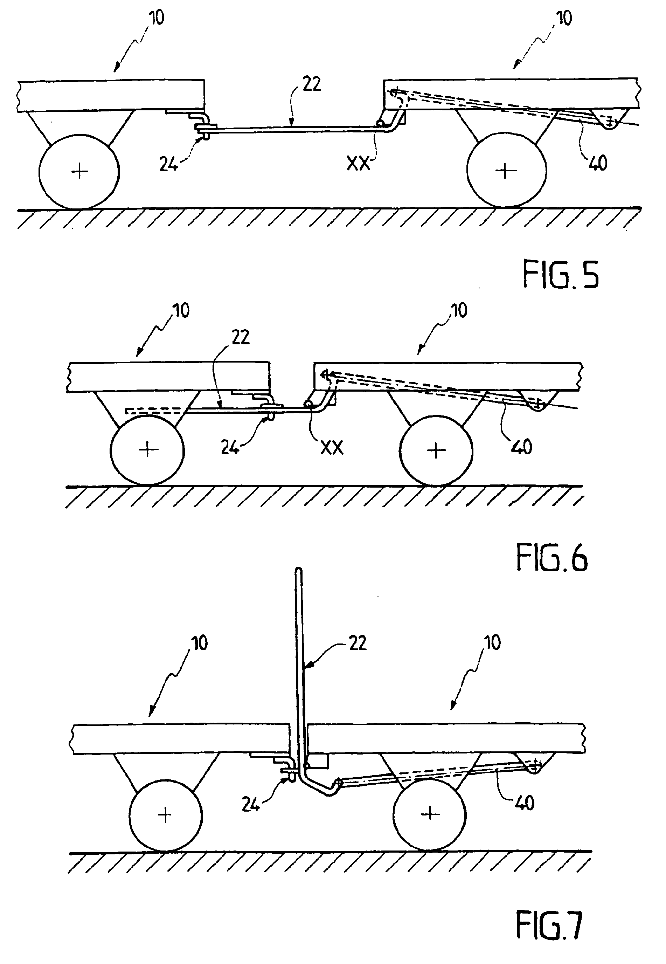

Dans la position éloignée de la figure 5, qui correspond à une position de remorquage, la longueur utile du timon est maximale ce qui permet notamment de réaliser un braquage court.

Par contre, dans la position rapprochée de la figure 6, qui correspond à une position à l'arrêt, la longueur utile du timon est minimale et l'extrémité antérieure du chariot est proche, voire en contact, avec l'extrémité arrière du tracteur (ici un autre chariot). Il en résulte que l'encombrement à l'arrêt est réduit.

L'invention procure ainsi un dispositif d'attelage de nature télescopique autorisant une longueur utile variable du timon.

Dans les positions des figures 5 et 6 qui correspondent à une position attelée, les branches 26 du timon 22 sont sensiblement horizontales et coopèrent avec le crochet 24. L'opérateur peut dételer facilement le chariot en appuyant, par exemple avec son pied, sur les deux branches du timon de manière à le dégager du crochet.

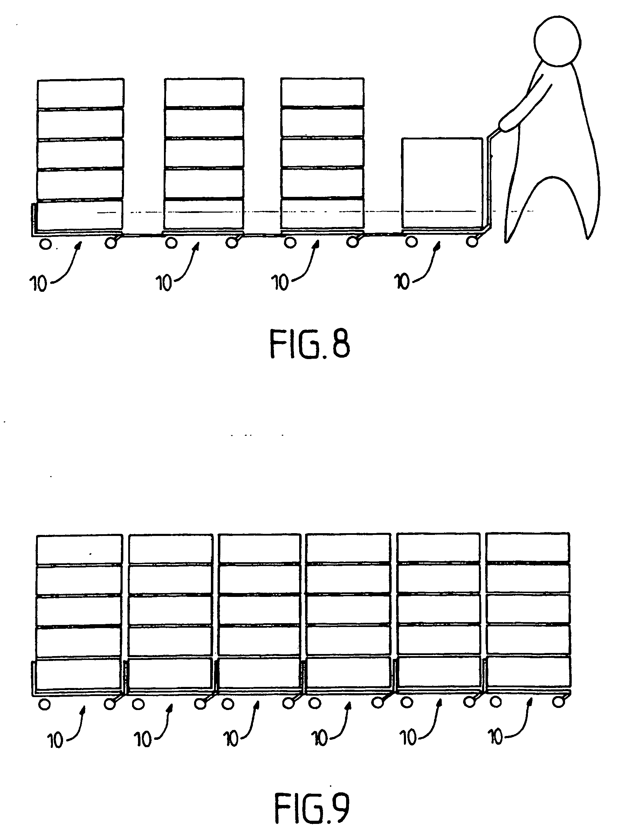

On se réfère maintenant à la figure 7 dans laquelle le timon 22 a pivoté, au delà de la position dressée, vers une position droite, en laquelle il s'étend sensiblement à la verticale. Le timon est maintenu dans cette position droite sous l'action du tracteur (ici le chariot précédent de la file) tout en étant dégagé du crochet de ce dernier. On obtient ainsi une position rapprochée ou comprimée au maximum permettant un compactage et réduisant l'encombrement en longueur de l'ensemble.

On comprendra mieux, en se référant respectivement aux figures 8 et 9, que les chariots, occupent un encombrement maximal en longueur dans la position de remorquage de la figure 8 et un encombrement minimal en longueur dans la position à l'arrêt de la figure 9, offrant ainsi une disposition compacte.

Comme on peut le voir sur les figurés 8 et 9, les chariots peuvent être utilisés pour transporter des caisses ou analogues. Dans tous les cas, les chariots sont facilement manoeuvrables et peuvent être ramenés bord à bord, aussi bien en étant attelés que dételés.

Même dans cette position rapprochée, la prise et la pose des caisses est aisée.

Le dispositif d'attelage de l'invention peut être facilement monté sur des chariots standard, sans nécessiter de modifications notables.

Bien entendu, l'invention n'est pas limitée aux formes de réalisation décrites précédemment à titre d'exemple et s'étend à d'autres variantes.

Ainsi, les moyens élastiques de rappel pourraient fonctionner aussi bien en compression.

L'invention trouve une application particulière aux chariots de manutention utilisés dans les locaux industriels, ou encore dans les gares, les aéroports, etc.

## Revendications

1. Dispositif d'attelage pour chariot de manutention, comprenant un timon (22) prévu à l'avant du chariot et un crochet (24) prévu à l'arrière d'un tracteur, en particulier d'un chariot précédent dans une file de chariots, le timon (22) et le crochet (24) étant propres à coopérer l'un avec l'autre,
**caractérisé en ce que** le timon (22) comporte une fente longitudinale (36) dans laquelle est propre à coulisser le crochet (24), en sorte que ledit crochet peut coulisser dans ladite fente longitudinale entre une position éloignée, en laquelle le chariot (10) est à une distance maximale du tracteur pendant le remorquage, et une position rapprochée, en laquelle le chariot est à une distance minimale du tracteur pour diminuer l'encombrement à l'arrêt.

2. Dispositif d'attelage selon la revendication 1, **caractérisé en ce que** le timon (22) s'étend sensiblement à l'horizontale dans les positions où il coopère avec le crochet (24).

3. Dispositif d'attelage selon l'une des revendications 1 et 2, **caractérisé en ce que** le timon (22) est relié à l'avant du chariot par des moyens d'articulation (30, 32) définissant un axe d'articulation (XX), de manière à pivoter entre une position d'accrochage, en laquelle le timon s'étend sensiblement à l'horizontale pour coopérer avec le crochet, et une position de relevage, en laquelle le timon est en position dressée et est dégagé du crochet.

4. Dispositif d'attelage selon la revendication 3, **caractérisé en ce que**, dans la position dressée, le timon (22) forme un angle aigu (α) par rapport à la verticale.

5. Dispositif d'attelage selon la revendication 4, **caractérisé en ce que** l'angle aigu (α) est d'environ 10°.

6. Dispositif d'attelage selon l'une des revendications 3 à 5, **caractérisé en ce que** le timon (22) est propre également à pivoter, au delà de la position dressée, vers une position droite, en laquelle il s'étend sensiblement à la verticale sous l'action du tracteur en étant dégagé du crochet de ce dernier.

7. Dispositif d'attelage selon l'une des revendications 3 à 6, **caractérisé en ce que** les moyens d'articulation comprennent une articulation (30, 32) s'étendant suivant un axe transversal (XX) sensiblement horizontal.

8. Dispositif d'attelage selon l'une des revendications 3 à 7, **caractérisé en ce qu'**il comprend en outre des moyens élastiques de rappel (40) propres à solliciter le timon (22) vers sa position de relevage, et que le crochet (24) s'étend vers le bas à partir d'un support (48) prévu sous le tracteur, en sorte que le timon est rappelé élastiquement en appui vers le support pour assurer automatiquement la coopération du timon (22) et du crochet (24).

9. Dispositif d'attelage selon la revendication 8, **caractérisé en ce que** les moyens élastiques de rappel (40) sont interposés entre le châssis (12) du chariot et le timon (22).

10. Dispositif d'attelage selon la revendication 9, **caractérisé en ce que** les moyens élastiques de rappel (40) travaillent en traction et sont interposés entre un premier point d'ancrage (42) du châssis du chariot et un deuxième point d'ancrage (38) situé à l'opposé du timon par rapport à son axe d'articulation (XX).

11. Dispositif d'attelage selon la revendication 10, **caractérisé en ce que** le deuxième point d'ancrage (38) est situé sur un prolongement coudé (34) prévu à l'opposé du timon (22) par rapport à l'axe d'articulation (XX) et disposé de telle sorte que, dans la position de relevage du timon, l'axe d'articulation (XX) du timon (22), le deuxième point d'ancrage (38) et le premier point d'ancrage (42) soient dans un même plan.

12. Dispositif d'attelage selon l'une des revendications 1 à 11, **caractérisé en ce que** le crochet (24) possède un encombrement en largeur (d) qui est inférieur à la largeur (1) de la fente (36) du timon (22).

13. Dispositif d'attelage selon la revendication 12, **caractérisé en ce que** le crochet (24) comprend un plot généralement cylindrique (46) ayant un diamètre (d) inférieur à la largeur (1) de la fente du timon et une rondelle (50) entourant le plot et ayant un diamètre (D) supérieur à la largeur (1) de la fente du timon.

14. Dispositif d'attelage selon l'une des revendications 1 à 13, **caractérisé en ce que** le timon (22) est formé à partir d'une tige repliée qui définit deux branches (26) sensiblement parallèles, réunies par un coude (28) en U.

15. Chariot de manutention équipé à l'avant (14) d'un timon (22) et à l'arrière (16) d'un crochet (24) faisant chacun partie d'un dispositif d'attelage tel que défini dans l'une des revendications précédentes.

## Claims

1. Coupling device for a handling truck, comprising a drawbar (22) provided at the front of the truck and a hook (24) provided at the rear of a tractor, in particular of a front truck in a line of trucks, the drawbar (22) and the hook (24) being capable of mutual cooperation, **characterised in that** the drawbar (22) comprises a longitudinal slot (36) in which the hook (24) may slide in such a manner that the hook can slide in the longitudinal slot between a remote position, in which the truck (10) is at a maximum distance from the tractor during towing, and a close position, in which the truck is at a minimum distance from the tractor in order to reduce the amount of space required when stationary.

2. Coupling device according to claim 1, **characterised in that** the drawbar (22) extends substantially horizontally in the positions in which it is cooperating with the hook (24).

3. Coupling device according to either of claims 1 or 2, **characterised in that** the drawbar (22) is connected to the front of the truck by articulation means (30, 32) defining an axis of articulation (XX), so as to pivot between a hooking position in which the drawbar extends substantially horizontally in order to cooperate with the hook, and a lifting position in which the drawbar is in a raised position and is disengaged from the hook.

4. Coupling device according to claim 3, **characterised in that** in the raised position the drawbar (22) forms an acute angle (α) relative to the vertical.

5. Coupling device according to claim 4, **characterised in that** the acute angle (α) is about 10°.

6. Coupling device according to one of claims 3 to 5, **characterised in that** the drawbar (22) is also capable of pivoting beyond the raised position towards an upright position in which it extends substantially vertically under the action of the tractor by being disengaged from the hook thereof.

7. Coupling device according to one of claims 3 to 6, **characterised in that** the articulation means comprise a hinge (30, 32) extending along a transverse axis (XX) which is substantially horizontal.

8. Coupling device according to one of claims 3 to 7, **characterised in that** it further comprises elastic pull-back means (40) capable of biasing the drawbar (22) towards its lifting position, and **in that** the hook (24) extends downward from a support (48) provided under the tractor, in such a manner that the drawbar is elastically pulled back in bearing towards the support in order to effect cooperation of the drawbar (22) and the hook (24) automatically.

9. Coupling device according to claim 8, **characterised in that** the elastic pull-back means (40) are interposed between the chassis (12) of the truck and the drawbar (22).

10. Coupling device according to claim 9, **characterised in that** the elastic pull-back means operate in tension and are interposed between a first anchoring point (42) of the truck chassis and a second anchoring point (38) located opposite the drawbar relative to its axis of articulation (XX).

11. Coupling device according to claim 10, **characterised in that** the second anchoring point (38) is located on a cranked extension (34) provided opposite the drawbar (22) relative to the axis of articulation (XX) and disposed so that, in the lifting position of the drawbar, the axis of articulation (XX) of the drawbar (22), the second anchoring point (38) and the first anchoring point (42) are in one plane.

12. Coupling device according to one of claims 1 to 11, **characterised in that** the hook (24) has a width requirement (d) which is less than the width (I) of the slot (36) of the drawbar (22).

13. Coupling device according to claim 12, **characterised in that** the hook (24) has a generally cylindrical cross-section (46) having a diameter (d) less than the width (I) of the slot of the drawbar and a washer (50) surrounding the cross-section and having a diameter (D) greater than the width (I) of the slot of the drawbar.

14. Coupling device according to one of claims 1 to 13, **characterised in that** the drawbar (22) is formed from a bent rod which defines two branches (26) which are substantially parallel and are connected by a U-shaped crank (28).

15. Maintenance truck equipped at the front (14) with a drawbar (22) and at the rear (16) with a hook (24), each forming part of a coupling device as defined in one of the preceding claims.

## Patentansprüche

1. Kupplungsvorrichtung für Flurförderfahrzeug, mit einer Deichsel (22), die vorne am Fahrzeug vorgesehen ist und einem Haken (24), der hinten an einem Zugfahrzeug, insbesondere einem vorhergehenden Förderfahrzeug in einer Reihe von Förderfahrzeugen vorgesehen ist, wobei die Deichsel (22) und der Haken (24) geeignet sind, miteinander zusammenzuwirken,
**dadurch gekennzeichnet, dass** die Deichsel (22) einen Längsschlitz (36) aufweist, in der der Haken (24) gleiten kann, derart, dass der Haken in dem Längsschlitz zwischen einer entfernten Position, in der das Fahrzeug (10) sich in einem maximalen Abstand von dem Zugfahrzeug während des Schleppens befindet, und einer herangezogenen Position, in der sich das Förderfahrzeug in einem minimalen Abstand vom Zugfahrzeug befindet, um den Platzbedarf im Stillstand zu verringern.

2. Kupplungsvorrichtung nach Anspruch 1, **dadurch gekennzeichnet, dass** die Deichsel (22) sich im Wesentlichen in der Horizontalen in den Positionen erstreckt, wo sie mit dem Haken (24) zusammenwirkt.

3. Kupplungsvorrichtung nach Anspruch 1 oder 2, **dadurch gekennzeichnet, dass** die Deichsel (22) mit der Vorderseite des Förderfahrzeugs mittels Gelenkeinrichtungen (30, 32) mit diesem verbunden ist, die eine Gelenkachse (XX) definieren, derart, dass sie zwischen einer Anhängposition, in der die Deixel sich im Wesentlichen in der Horizontalen erstreckt, um mit dem Haken zusammenzuwirken, und einer angehobenen Position schwenkt, in der die Deichsel sich in einer aufgerichteten Position und gelöst von dem Haken befindet.

4. Kupplungsvorrichtung nach Anspruch 3, **dadurch gekennzeichnet, dass** in der aufgerichteten Position die Deichsel (22) bezüglich der Vertikalen einen spitzen Winkel (α) bildet.

5. Kupplungsvorrichtung nach Anspruch 4, **dadurch gekennzeichnet, dass** der spitze Winkel (α) ungefähr 10° beträgt.

6. Kupplungsvorrichtung nach einem der Ansprüche 3 bis 5, **dadurch gekennzeichnet, dass** die Deichsel (22) auch in der Lage ist, über die aufgerichtete Position hinaus in eine gerade Position zu schwenken, in der sie sich im Wesentlichen in der Vertikalen unter der Einwirkung des Zugfahrzeugs erstreckt, wobei sie von dem Haken des letzteren gelöst ist.

7. Kupplungsvorrichtung nach einem der Ansprüche 3 bis 6, **dadurch gekennzeichnet, dass** die Gelenkeinrichtungen ein Gelenk (30, 32) aufweisen, das sich gemäß einer Querachse (XX) im Wesentlichen horizontal erstreckt.

8. Kupplungsvorrichtung nach einem der Ansprüche 3 bis 7, **dadurch gekennzeichnet, dass** sie darüber hinaus elastische Federeinrichtungen (40) aufweist, die in der Lage sind, die Deichsel (22) in seine Anhebungsposition zu drücken, und dass der Haken (24) sich ausgehend von einem Lager (48) nach unten erstreckt, das unter dem Zugfahrzeug vorgesehen ist, derart, dass die Deichsel elastisch gegen das Lager gedrückt wird, um automatisch das Zusammenwirken der Deichsel (22) und des Hakens (24) sicherzustellen.

9. Kupplungsvorrichtung nach Anspruch 8, **dadurch gekennzeichnet, dass** die elastischen Federeinrichtungen (40) sich zwischen dem Chassis (12) des Förderfahrzeugs und der Deichsel (22) befinden.

10. Kupplungsvorrichtung nach Anspruch 9, **dadurch gekennzeichnet, dass** die elastischen Federeinrichtungen (40) unter Zug arbeiten und zwischen einem ersten Ankerungspunkt (42) des Chassis des Förderfahrzeugs und einem zweiten Ankerungspunkt (38) gesetzt sind, der sich entgegen der Deichsel bezüglich ihrer Gelenkachse (XX) befindet.

11. Kupplungsvorrichtung nach Anspruch 10, **dadurch gekennzeichnet, dass** der zweite Ankerungspunkt (38) sich auf einer geknickten Verlängerung (34) befindet, die gegenüber der Deichsel (22) bezüglich der Gelenkachse (XX) vorgesehen ist, und derart angeordnet ist, dass in der angehobenen Position der Deichsel die Gelenkachse (XX) der Deichsel (22), der zweite Ankerungspunkt (38) und der erste Ankerungspunkt (42) sich in einer selben Ebene befinden.

12. Kupplungsvorrichtung nach einem der Ansprüche 1 bis 11, **dadurch gekennzeichnet, dass** der Haken (24) eine Breitenausdehnung (d) besitzt, die geringer ist als die Breite (I) des Schlittens (36) der Deichsel (22).

13. Kupplungsvorrichtung nach Anspruch 12, **dadurch gekennzeichnet, dass** der Haken (24) einen allgemein zylindrischen Zapfen (46) aufweist, der einen Durchmesser (d) hat, der geringer ist als die Breite (I) des Schlitzes der Deichsel und eine Scheibe (50) aufweist, die den Zapfen umgibt und einen Durchmesser (D) hat, der größer ist als die Breite (I) des Schlitzes der Deichsel.

14. Kupplungsvorrichtung nach einem der Ansprüche 1 bis 13, **dadurch gekennzeichnet, dass** die Deichsel (22) ausgehend von einer umgefalteten Stange gebildet ist, die zwei im Wesentlichen parallele Arme (26) definiert, die durch einen U-Bogen (28) verbunden sind.

15. Flurförderfahrzeug, das an der Vorderseite (14) mit einer Deichsel (22) und an der Hinterseite (16) mit einem Haken (24) ausgerüstet ist, wobei beide Teil einer Kupplungsvorrichtung sind, wie sie in einem der vorhergehenden Ansprüche definiert ist.
